# EUROPEAN PATENT APPLICATION

(11) **EP 2 463 346 A1**
(43) Date of publication of application: **13.06.2012**
(21) Application number: 10194729.9
(22) Date of filing: 13.12.2010
(51) Int. Cl.: C09D 11/10

(54) **UV-curable ink**

(71) Applicant: Siegwerk Benelux SA, 2880 Bornem (BE)
(72) Inventor: Noirot, Pierre-Antoine, 74800 Arenthon (FR); Marsille, Thierry, 74800 Saint Pierre en Faucigny (FR)
(74) Representative: Hepp Wenger Ryffel AG

(57) **Abstract**

The present invention is related to a UV-curable solvent-based printing ink comprising a reactive diluent and a polyurethane resin which is inert to said diluent.

## Description

The present invention is related to novel and improved UV-curable inks showing in particular an improved scratch resistance.

Radiation-curable inks, in particular ultraviolet-curable (UV-curable) inks, have become increasingly popular. They are applicable in a wide range of printing techniques and have the advantage of very fast curing upon irradiation with electromagnetic radiation of an appropriate wavelength. Alternatively, curing of said inks can also be performed using electron beams. It is the rapid curing of these inks which make them attractive for various applications.

Curing of radiation curable inks predominantly proceeds via a radical polymerisation mechanism. Thus, the binder material of radiation curable inks must comprise functional groups which are capable of undergoing such a radical curing mechanism. Typically, these functional groups are unsaturated moieties such as carbon-carbon double bonds, most commonly in the form of acrylate moieties. In UV curing inks, a photoinitiator has to be present in order to evoke the radical polymerisation. In electron beam curing inks, this is not necessary since the electrons themselves act as radical starters. Therefore, a typical radiation curable ink comprises an acrylate containing material as a binder component and optionally a photoinitiator.

In the field of printing, mainly epoxy acrylates, polyurethane acrylates and polyester acrylates have been used as binders in UV-curable inks. Those binders are obtained by reacting an acrylate with a suitable epoxide, urethane resin or polyester resin. Unfortunately, for certain applications the scratch resistance and adhesion of such conventional UV inks is not satisfactory. For example, in various printing applications, such as tobacco printing, first a layer of white ink is applied onto a substrate. Subsequently, a number of coloured layers are applied on top of said white layer. During said subsequent printing steps, the white layer is exposed to harsh printing conditions under which the white layer must remain adhered to the substrate and does not have to be vulnerable to scratching by the printing press.

It has been suggested to use as a binder of a UV-curable ink e.g. a mixture of an inert polyester resin (i.e. a polyester resin which does not react with other ingredients under the applied conditions) and a reactive diluent, such as unsaturated monomers which polymerize under UV-curing conditions. A commercial binder is for example Genomer 6050 from Rahn, which is a chlorinated polyester resin in a reactive diluent. However, also those binders do not meet the criteria of sufficient adhesion and improved scratch resistance required for certain applications.

It was the problem underlying the present invention to provide a UV curable ink showing improved properties as compared to conventional UV curable inks.

According to the present invention, this problem has been solved by a UV-curable printing ink comprising a reactive diluent and a polyurethane resin which is inert to said diluent.

Preferably, the UV-curable printing ink is a solvent-based printing ink. According to the present invention, the term "solvent-based" defines a printing ink which does not comprise any substantial amount of water as a solvent. Substantial in this context means more than 5 wt.-% water.

According to the present invention, the term "inert polyurethane resin" is used for polyurethane resins which under the conditions of manufacturing, printing and processing do not react with the reactive diluent also present in the ink at all, or at most 5%, preferably, 3% of the polyurethane resins react under those conditions. The inert polyurethane resins of the present invention do not comprise unsaturated double bonds which might undergo a polymerisation reaction.

According to the present invention, the amounts given for the components of the printing inks are understood to sum up to 100 wt.-%.

According to a preferred embodiment of the present invention, the inert polyurethane resin is synthesized in situ in said reactive diluent. This allows a precise adjustment of the degree of dilution and thus of the reactivity of the printing ink, as well as of the degree of polymerisation of the polyurethane.

It has been surprisingly found that a UV curable ink of the present invention shows a clearly improved scratch resistance as compared to UV inks of the prior art, and still exhibits a sufficient adhesion comparable with that of prior art inks. Moreover, the inks of the present invention show very good non-yellowing properties.

The printing ink of the present invention has a further advantage of flexibility. The polyurethane component can be modified in order to improve properties such as pigment wetting, gelification or spreading. Alternatively, two different inert polyurethane resins may be used in combination and lead to an overall improvement of the properties of the ink. For example, pigment wetting properties of the ink of the present invention may be improved if an inert polyurethane resin modified with a fatty acid such as stearic acid or ricinoleic acid or a fatty alcohol like tridecylic alcohol is used in combination with an unmodified inert polyurethane resin. On the other hand, since the polyurethane and the reactive diluent are separate components, also the nature and/or amount of the reactive diluent may be modified in order to adjust the properties of the printing ink as desired.

According to the present invention, the ink comprises 20-50 wt.-%, preferably 30-50 wt.-% and most preferably 40-50 wt.-% of the total amount of the printing ink of at least one reactive diluent.

According to the present invention, the ink comprises 15-40 wt.-%, preferably 20-35 wt.-% and most preferably 20-30 wt.-% of the total amount of the printing ink of the inert polyurethane resin (s) .

Additionally, the ink of the present invention comprises at least one pigment component in an amount of 10-40 wt.-%, preferably 15-30 wt.-% and most preferably 20-30 wt.-% of the total amount of the printing ink.

The printing ink of the present invention furthermore comprises at least one photoinitiator component in an amount of 1-15 wt.-%, preferably 5-10 wt.-%, of the total amount of the printing ink.

The printing ink of the present invention may furthermore comprise additives conventionally used in UV-curable printing inks in typical amounts. Examples of such conventional additives are stabilizers, fillers, or antitack additives. Those additives are used in amounts conventionally used in UV-curable printing inks of the prior art.

The polyurethanes present in the printing inks of the present invention are synthesized from diisocyanates and polyols. The synthesis of polyurethanes is well-known to a skilled man.

Polyols useful for the purposes of the present invention may be selected from the group of aliphatic polyether diols such as polyethylene glycol, polypropylene glycol, polytetramethylene glycol, polyhexamethylene glycol, polyheptamethylene glycol, and polydecamethylene glycol. The aliphatic polyether polyols are commercially available as, for example, "PTMG650", "PTMGlOOO", and "PTMG2000" (manufactured by Mitsubishi Chemical Corp.), "PPG400", "PPGlOOO", "PPG2000", "PPG3000", "EXCENOL 720", "EXCENOL 1020", and "EXCENOL 2020" (manufactured by Asahi Glass Urethane Co., Ltd.), "PEGlOOO", "Unisafe DCIlOO", and "Unisafe DC1800" (manufactured by Nippon Oil and Fats Co., Ltd.), "PPTG2000", "PPTGlOOO", "PTG400", and "PTGL2000" (manufactured by Hodogaya Chemical Co., Ltd.), "Z-3001-4", "Z- 3001-5", "PBG2000A", and "PBG2000B" (manufactured by Daiichi Kogyo Seiyaku Co., Ltd.), and the like. Alternatively, also biologically renewable polyols such as isosorbide may be used.

Alternatively, also polyester diols obtained by reacting a polyhydric alcohol with a polybasic acid are useful. Examples of suitable polyhydric alcohols include ethylene glycol, polyethylene glycol, propylene glycol, polypropylene glycol, tetramethylene glycol, polytetramethylene glycol, 1,6-hexanediol, neopentyl glycol, 1,4-cyclohexanedimethanol, 3-methyl-1,5-pentanediol, 1,9-nonanediol, 2-methyl-1,8-octanediol, and the like. As examples of the polybasic acid, phthalic acid, isophthalic acid, terephthalic acid, maleic acid, fumaric acid, adipic acid, and sebacic acid may be mentioned.

Also suitable are polycaprolactone diols, which are obtained by reacting ε-caprolactone and diols. Examples of such diols used for the reaction with ε-caprolactone include ethylene glycol, polyethylene glycol, propylene glycol, polypropylene glycol, tetramethylene glycol, polytetramethylene glycol, 1,2-polybutylene glycol, 1,6-hexanediol, neopentyl glycol, 1,4-cyclohexanedimethanol, 1,4-butanediol, and the like. Polycaprolactone diols are commercially available as PLACCEL 205, 205AL, 212, 212AL, 220, 220AL (manufactured by Daicel Chemical Industries, Ltd.), and the like.

Examples of suitable polyols other than the above-mentioned diols include ethylene glycol, propylene glycol, 1,4-butanediol, 1,5-pentanediol, 1,6-hexanediol, neopentyl glycol, 1,4-cyclohexanedimethanol, hydrogenated bisphenol A, hydrogenated bisphenol F, the dimethylol derivative of dicyclopentadiene, tricyclodecanedimethanol, pentacyclodecanedimethanol, β-methyl-δ-valerolactone, polybutadiene with a terminal hydroxyl group, hydrogenated polybutadiene with a terminal hydroxyl group, castor oil-modified diol, polydimethylsiloxane compounds with terminal diols, polydimethylsiloxane carbitol modified polyol, and the like.As examples for polyols having a bisphenol structure, an alkylene oxide addition polyol bisphenol A, an alkylene oxide addition polyol bisphenol F, hydrogenated bisphenol A, hydrogenated bisphenol F, an alkylene oxide addition polyol of hydrogenated bisphenol A, alkylene oxide addition polyol of hydrogenated bisphenol F, and the like can be given. Of these, a polyol having a bisphenol structure, particularly an alkylene oxide addition polyol of bisphenol A is preferable. These polyols are commercially available as, for example, "Uniol DA400", "Uniol DA700", "Uniol DAlOOO", and "Uniol DB400" (manufactured by Nippon Oil and Fats Co., Ltd.), and the like.

There are no specific limitations with respect to the manner of polymerization of the structural units of these polyols, which may be any of random polymerization, block polymerization, and graft polymerization. As examples, aliphatic polyether polyols obtained by ring-opening copolymerization of two or more ion-polymerizable cyclic compounds, and the like can be given. As examples of the ion-polymerizable cyclic compound, cyclic ethers such as ethylene oxide, propylene oxide, butene-1-oxide, isobutene oxide, 3,3-bischloromethyloxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monoxide, isoprene monoxide, vinyloxetane, vinyltetrahydrofuran, vinylcyclohexene oxide, phenyl glycidyl ether, butyl glycidyl ether, and glycidyl benzoate can be given. A polyether polyol obtained by ring-opening copolymerization of the above ion-polymerizable cyclic compound and a cyclic imine such as ethyleneimine, a cyclic lactonic acid such as β-propyolactone or lactide glycolic acid, or a dimethylcyclopolysiloxane may also be used. As examples of the specific combinations of two or more ion-polymerizable cyclic compounds, a combination of tetrahydrofuran and propylene oxide, a combination of tetrahydrofuran and 2-methyltetrahydrofuran, a combination of tetrahydrofuran and 3-methyltetrahydrofuran, a combination of tetrahydrofuran and ethylene oxide, a combination of propylene oxide and ethylene oxide, a combination of butene-1-oxide and ethylene oxide, a ternary polymer of tetrahydrofuran, butene-1-oxide, and ethylene oxide, and the like can be given. The ring-opening copolymer of these ion-polymerizable cyclic compounds may be either a random copolymer or a block copolymer. The copolymer diol of butene-1-oxide and ethylene oxide is commercially available as "EO/B0500", "EO/BO1000", "EO/B02000", "EO/BO3000", and "EO/BO4000" (manufactured by Daiichi Kogyo Seiyaku Co., Ltd.), and the like.

As the diisocyanate compound, an aromatic diisocyanate, alicyclic diisocyanate, aliphatic diisocyanate, and the like can be used. As examples of the aromatic diisocyanate, 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, bis(2-isocyanateethyl)fumarate, 6-isopropyl-1,3-phenyl diisocyanate, 4-diphenylpropane diisocyanate, tetramethylxylylene diisocyanate, and the like can be given. Examples of the alicyclic diisocyanate include isophorone diisocyanate, methylenebis(4-cyclohexylisocyanate), hydrogenated diphenylmethane diisocyanate, hydrogenated xylylene diisocyanate, 2,5-bis(isocyanatemethyl)-bicyclo[2.2.1]heptane, 2,6-bis(isocyanatemethyl)-bicyclo[2.2.1]heptane, and the like. As examples of the aliphatic diisocyanate, 1,6-hexane diisocyanate, 2,2,4-trimethylhexamethylene diisocyanate, and lysine diisocyanate. Of these, 2,4-tolylene diisocyanate, isophorone diisocyanate, xylylene diisocyanate, and methylenebis(4-cyclohexylisocyanate) are preferable.

If a modification of the resulting polyurethane is envisaged, an iosocyanate component having additional functional groups and/or additional isocyanate groups (such as triisocyanates or dimers or trimers or biuret derivatives of diisocyanates) may be used. Examples are the biuret of HDI (Hexamethylenediisocyanate), 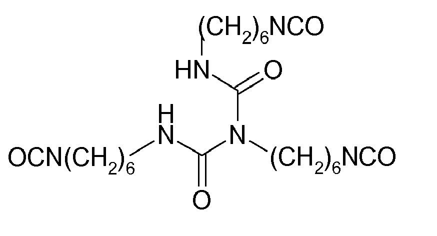 the biuret of IPDI(isophorone diisocyanate), the trimer of HDI or the trimer of IPDI. According to the present invention, preferred trifunctional isocyanate compounds are the following commercially available materials: Tolonate HDT-LV, Tolonate HDT-LV2, Tolonate HDB-LV (all from Rhodia), Desmodur XP 2410, Desmodur N3600 or Desmodur N3200 (all from Bayer).

Modifying compounds may be attached to free functional groups of those isocyanate derivatives. For example, the attachment of a fatty acid (such as stearic acid) to a respective isocyanate derivative results, after reaction with a corresponding polyol component mentioned above, in a polyurethane providing improved pigment wetting. Other modifying components may be attached as well.

If a combination of two or more polyurethanes is used, the ratio of the different starting materials is adjusted in order to obtain a printing ink having the desired properties. This adjustment is within the common routine of a skilled man.

The synthesis of a polyurethane from a diisocyanate and a polyol is well-known in the art, as mentioned above. Usually, the starting materials are added together into a reaction flask, a catalyst such as dibutyl tin dilaurate, bismuth carboxylate or a zirconium chelate is added and the reaction mixture is heated to about 45 to 85°C, preferably 65 to 75 °C, for a time sufficient for the reaction to take place, for example from 15 minutes to 3 hours. Depending on the starting materials, the exothermic reaction that occurs in the mixture is so pronounced that the temperature should be kept under a certain limit, for example under 70°C. Also preferably, the reaction is carried out in the presence of oxygen (e.g. air) so as to prevent a polymerization reaction involving the acrylate moieties of the reactive diluent. According to a preferred embodiment of the present invention, an air flow of around 150 ml/min is used. Details concerning this reaction may be found in e.g. WO 2006/085937, US-5,703,141, GB-2,280,905, or US-6,465,539, the respective content thereof being incorporated herewith by reference.

According to the present invention, a slight excess of polyol over isocyanate is used. Typically, a ratio OH/NCO of 2:1 to 1.01:1, preferably 1.5:1.1, is used.

According to the present invention, the resulting polyurethane is used in a UV-curable printing ink in combination with a reactive diluent. This is a liquid monomer which upon irradiation with electromagnetic radiation in the UV range polymerizes to form a cured binder layer. In particular, acrylates are useful as reactive diluents. One single reactive diluent or a mixture of reactive diluents may be used.

According to the present invention, under the reaction conditions involved the reactive diluent does not react at all with the diisocyanates or polyols serving as starting materials of the polyurethane or the polyurethane itself, or at most to an extent of 5%, preferably 3%, based on the amount of polyurethane resin derivable from said components.

According to the present invention, suitable reactive diluents may be selected from the group consisting of 2(2-ethoxyethoxy) ethyl acrylate, 2-phenoxyethyl acrylate, 2-phenoxyethyl methacrylate, C12/C14 alkyl methacrylate, C16/C18 alkyl acrylate, C16/C18 alkyl methacrylate, caprolactone acrylate, cyclic trimethylolpropane formal acrylate, ethoxylated (4) nonyl phenol acrylate, isobornyl acrylate, isobornyl methacrylate, isodecyl acrylate, lauryl acrylate, methoxy polyethylene glycol (350) monomethacrylate, octyldecyl acrylate, polypropylene glycol monomethacrylate, stearyl acrylate, tetrahydrofurfuryl acrylate, tetrahydrofurfuryl methacrylate, tridecyl acrylate, 1,3-butylene glycol dimethacrylate, 1,4-butanediol dimethacrylate, 1,6 hexanediol diacrylate, 1,6 hexanediol dimethacrylate, alkoxylated diacrylate, diethylene glycol dimethacrylate, dipropylene glycol diacrylate, esterdiol diacrylate, ethoxylated (10) bisphenol a diacrylate, ethoxylated (2) bisphenol a dimethacrylate, ethoxylated (3) bisphenol a diacrylate, ethoxylated (3) bisphenol a dimethacrylate, ethoxylated (4) bisphenol a diacrylate, ethoxylated (4) bisphenol a dimethacrylate, ethoxylated bisphenol a dimethacrylate, ethoxylated(10) bisphenol dimethacrylate, ethylene glycol dimethacrylate, polyethylene glycol (200) diacrylate polyethylene glycol (400) diacrylate, polyethylene glycol (400) dimethacrylate, polyethylene glycol (600) diacrylate, polyethylene glycol (600) dimethacrylate, polyethylene glycol 400 diacrylate, polyethylene glycol dimethacrylate, propoxylated (2) neopentyl glycol diacrylate, tetraethylene glycol diacrylate, tricyclodecane dimethanol diacrylate, tricyclodecanedimethanol dimethacrylate, triethylene glycol diacrylate, triethylene glycol dimethacrylate,tripropylene glycol diacrylate, ethoxylated (15) trimethylolpropane triacrylate, ethoxylated (3) trimethylolpropane triacrylate, ethoxylated (6) trimethylolpropane triacrylate, ethoxylated (9) trimethylolpropane triacrylate, ethoxylated 5 pentaerythritol triacrylate, ethoxylated(20) trimethylolpropane triacrylate, propoxylated (5.5) glyceryl triacrylate pentaerythritol triacrylate, propoxylated (3) glyceryl triacrylate, propoxylated (3) trimethylolpropane triacrylate, trimethylolpropane triacrylate, trimethylolpropane trimethacrylate, tris (2-hydroxy ethyl) isocyanurate triacrylate, di-trimethylolpropane tetraacrylate, dipentaerythritol pentaacrylate, and pentaerythritol tetraacrylate.

According to the present invention, it has been found to be particularly advantageous if the polyurethane is synthesized in the presence of the reactive diluent, which serves as solvent for the reaction. This significantly simplifies the manufacture of the printing inks of the present invention, since the printing ink can be made in a one-pot-process. It is not necessary to separately synthesize the polyurethane, and dry and purify it before it is added to the reactive diluent.

According to the present invention, it has been surprisingly found that the synthesis of the polyurethane can be carefully controlled in the reactive diluent, so that no significant amount of unwanted side-products is produced. Moreover, it has been surprisingly found that the degree of polymerisation (i.e. the final molecular weight) of the polyurethane can not only be controlled via the OH/NCO ratio of the starting materials, but also by adjusting the viscosity of the reaction mixture. To this end, the synthesis of the polyurethane is started in the presence of very little or even no reactive diluent. In the course of the reaction, an increasing amount of reactive diluent is added. For example, after the start of the reaction between the isocyanate and polyol components, about 1/5 to 1/2, preferably 1/4 to 1/3 of the entire amount of reactive diluent to be present in the final printing ink is added to the reaction mixture. When the generation of the polyurethane proceeds, which results in an increasing viscosity of the reaction mixture, the remaining amount of reactive diluent is added. The diluent has a moderating effect and lessens the increase of viscosity in the viscosity.

Alternatively, it is also possible to add all components into the reactor before starting the reaction.

According to the present invention, in order to obtain a desired water balance of the resulting printing ink it may be preferable to convert the free hydroxy groups of the starting polyol component, which has been used in excess, as mentioned above. To this effect, one continuously surveys the concentration of free isocyanate moieties in the reaction mixture. Once the concentration of free isocyanate moieties in the reaction mixture has reached 0% (i.e. there are no more free NCO groups left), a predetemined amount of monisocyanate is added to the reaction mixture. According to the present invention, suitable monoisocyanates amy be selected, for example, from the group consisting of m-tolyl isocyanate, 4-isopropylphenyl isocyanate, isopropyl isocyanate, cyclohexyl isocyanate n-butyl isocyanate, and t-butyl isocyanate. Especially in offset printing, the free hydroxyl groups should be converted to the extent possible, since free hydroxyl groups harm the printability of an offset ink which otherwise absorbs too much water during the offset printing process.

According to the present invention, the binder system of inert polyurethane resin and reactive diluent should have a viscosity of 200-400 Poises, preferably 250-300 Poises, at 30°C and a shear rate between 40.000 s⁻¹ and 70.000 s⁻¹, as measured with a Laray viscometer. A Laray Viscometer determines the viscosity of liquids and viscous materials by measuring the time required for a rod to travel a specified distance. Viscosity is calculated from this time. This method is well-known to a skilled man. Suitable Laray viscosimeters may be obtained, for example, from Testing Machines Inc.

The above mixture of inert polyurethane and reactive diluent is a suitable radiation curable binder for radiation curable printing inks. Today, the predominant radiation curable inks are UV-curable inks. Electron beams as radiation source are, however, playing an increasing role in today's printing technology. On the one hand, there are comparably high costs for the equipment necessary for electron beam curing, as well as due to safety concerns caused by the relatively high energy of the electrons. On the other hand, electron beam curing provides for a very deep and complete curing of a printing ink and is thus the method of choice for certain specific printing processes.

UV-curable inks and electron-beam curable inks closely resemble each other with respect to their composition. The major difference is that in electron beam curable inks no photoinitiator has to be present. This leads to a reduction of odour problems.

Thus, radiation curable inks of the present invention comprise at least one pigment, the above binder and optionally additives. In the case of UV curable inks, as already mentioned, one of the additives has to be a photoinitiator.

As far as the pigment component is concerned, conventional pigments used in radiation curable printing inks may also be used in the inks of the present invention. Examples of suitable pigments are phthalocyanine Blue (CI Pigment Blue 15:3), Pigment red 146, Pigment red 122, CI pigment red 57.1, carbon black (CI pigment black 7), or CI pigment white 8.

Photoinitiators capable of initiating the polymerization reaction evoked by UV curing are well-known to the skilled man. For example, benzophenone and derivatives therefrom, Acetophenone and derivatives therefrom, benzoine and derivatives therefrom, or thioxanthones and derivatives therefrom may be mentioned as photoinitiators useful for the purposes of the present invention. Commercially available photoinitiators useful for the present invention are, for example, Irgacure 819 or polymeric photoinitiators such as polymeric ITX or polymeric EDB. According to the present invention, the UV curable printing ink comprises 0.1 to 20 % by weight, preferably 1 to 10% by weight of the total ink of said photoinitiator. As mentioned above, electron beam curing inks do not require the presence of a photoinitiator.

Photosynergists such as amine derivatives may be optionally present in the UV curing inks of the present invention.

Additives suitable for the printing inks of the present invention involve commonly known additives of radiation curable inks, such as waxes, stabilizers, fillers etc. These are well-known to the skilled man and need not be discussed in further detail here.

The various printing techniques are of course well-known and need not be discussed here. Also the equipment for the subsequent UV or electron radiation curing is well-known and does not be described in detail here.

According to the present invention, the present printing inks are especially suitable for offset, screen and flexographic printing.

The present invention will now be explained in more detail with reference to non-limiting examples.

### Example 1: Synthesis of a binder of the present invention

At room temperature, 0.3346 eq (43.5 g) of MDI (Methylene diisocyanate, 130g/ Eq) and 0.4016 eq (86.35 g) of PPG400 (polypropylene glycol 400, 215g/eq) were added in a reactor, together with 20 mg of phenotiazine and 30 mg of hydroquinone (ratio OH/NCO = 1.2).

The reaction mixture was heated to 65°C, and 50 µl of zinc acethylacetonate were added. When the temperature reached 80°C, 100 g TMPTA (trimethylolpropantriacrylate) were added. With further progress of the reaction, the temperature raised to 85°C, and then further 200 g TMPTA were added.

The concentration of free isocyanate groups in the reaction mixture was controlled. When it reached 0%, 0.0223 eq of p-Toluenesulfonyl isocyanate were added to react with free hydroxyl groups of the excess of polyol components. The reaction was considered finished when the concentration of free isocyanate groups in the reaction mixture reached again 0% (i.e. the monoisocyanate was entirely converted).

The resulting product had a viscosity of 250-300 Poises, as measured with a Laray viscosimeter at 30°C an a shear rate between 40.000 s⁻¹ and 70.000 s⁻¹. About 600g of the inert polyurethane resin were obtained.

### Example 2: synthesis of black printing ink

A printing ink of the present invention was prepared by mixing the following components:

| **Component** | **Wt.-%** |
|---|---|
| Binder of example 1 (inert polyurethane resin in TMPTA) | 45.7 |
| TMPTA | 13.5 |
| Stabilizer (Florstab UV-1, from Kromachem) | 1 |
| Photoinitiators (mixture of benzophenone and hydroxycyclohexylphenylketone and 2-methyl-1-[(4-methyl)thiophenyl]-2-morpholinopropane-1-one) | 9.5 |
| Filler (talc) | 4 |
| Black Pigment | 22.3 |
| Antitack paste (mixture of silicium dioxide and TMPTA) | 4 |

### Comparative examples 1 to 3

The same procedure as described in example 2 was carried out using the same ingredients as in example 2, but in comparative examples 1 to 3, the binder according to example 1 of the present invention was replaced by conventional binders for UV printing inks:

| **Component** | **Comparative example 1** parts by weight | **Comparative example 2** parts by weight | **Comparative example 3** parts by weight |
|---|---|---|---|
| Binder | Laropal A81* | Genomer 6050** | KTR123*** |
| | 45.7 | 41 | 41 |
| TMPTA | 13.5 | 20 | 13.5 |
| Stabilizer | 1 | 1 | 1 |
| Photoinitiators | 9.5 | 9.5 | 9.5 |
| Filler | 4 | 4 | 4 |
| Black Pigment | 22.3 | 22.3 | 22.3 |
| Antitack paste | 4 | 4 | 4 |

| | | | |
|---|---|---|---|
| * Aldehyde urea resin/TMPTA from BASF ** chlorinated polyester resin/TMPTA from Rahn *** ketonic resin/TMPTA from Suparna | | | |

### Example 3: synthesis of cyan printing ink

A printing ink of the present invention was prepared by mixing the following components:

| **Component** | **Wt.-%** |
|---|---|
| Binder of example 1 (inert polyurethane resin in TMPTA) | 46 |
| TMPTA | 13.5 |
| Stabilizer (Florstab UV-1, from Kromachem) | 1 |
| Photoinitiators (mixture of benzophenone and hydroxycyclohexylphenylketone and 2-methyl-1-[(4-methyl)thiophenyl]-2-morpholinopropane-1-one) | 9.5 |
| Filler (talc) | 4 |
| Blue Pigment | 22 |
| Antitack paste (mixture of silicium dioxide and TMPTA) | 4 |

### Comparative examples 4 to 6

The same procedure as described in example 3 was carried out using the same ingredients as in example 3, but in comparative examples 4 to 6, the binder according to example 1 of the present invention was replaced by conventional binders for UV printing inks:

| **Component** | **Comparative example 4** parts by weight | **Comparative example 5** parts by weight | **Comparative example 6** parts by weight |
|---|---|---|---|
| Binder | Laropal A81* | Genomer 6050** | KTR123*** |
| | 49.5 | 46 | 46 |
| TMPTA | 10 | 13.5 | 13.5 |
| Stabilizer | 1 | 1 | 1 |
| Photoinitiators | 9.5 | 9.5 | 9.5 |
| Fillers | 4 | 4 | 4 |
| Blue Pigment | 22 | 22 | 22 |
| Antitack paste | 4 | 4 | 4 |

| | | | |
|---|---|---|---|
| * Aldehyde urea resin/TMPTA from BASF ** chlorinated polyester resin/TMPTA from Rahn *** ketonic resin/TMPTA from Suparna | | | |

### Example 4: synthesis of white printing ink

A printing ink of the present invention was prepared by mixing the following components:

| **Component** | **Wt.-%** |
|---|---|
| Binder of example 1 (inert polyurethane resin in TMPTA) | 38 |
| TMPTA | 9 |
| Stabilizer (Florstab UV-1, from Kromachem) | 1 |
| Photoinitiators (mixture of benzophenone and hydroxycyclohexylphenylketone and 2-methyl-1-[(4-methyl)thiophenyl]-2-morpholinopropane-1-one) | 4.5 |
| Filler (talc) | 2.5 |
| Blue Pigment | 40 |
| Antitack paste (mixture of silicium dioxide and TMPTA) | 5 |

### Comparative examples 7 to 9

The same procedure as described in example 4 was carried out using the same ingredients as in example 4, but in comparative examples 7 to 9, the binder according to example 1 of the present invention was replaced by conventional binders for UV printing inks:

| **Component** | **Comparative example 7** parts by weight | **Comparative example 8** parts by weight | **Comparative example 9** parts by weight |
|---|---|---|---|
| Binder | Laropal A81* | Genomer 6050** | KTR123*** |
| | 40 | 38 | 38 |
| TMPTA | 7 | 9 | 9 |
| Stabilizer | 1 | 1 | 1 |
| Photoinitiators | 4.5 | 4.5 | 4.5 |
| Fillers | 2.5 | 2.5 | 2.5 |
| White Pigment | 40 | 40 | 40 |
| Antitack paste | 5 | 5 | 5 |

| | | | |
|---|---|---|---|
| * Aldehyde urea resin/TMPTA from BASF ** chlorinated polyester resin/TMPTA from Rahn *** ketonic resin/TMPTA from Suparna | | | |

### Results

### Adhesion test:

On the substrate indicated in the table below, a layer of the printing ink of one of the above examples and comparative examples was applied by offset printing (Little Joe printer) in an amount of 1.5 g/m², and dried with UV light (160 W/cm, 30 m/min speed of conveyor). A strip of a pressure-sensitive adhesive tape (810 and 683 from 3M) was applied onto the printed substrate, and then removed again. The adhesion of the printed layer on the substrate is evaluated by the amount of ink layer which was removed (i.e. delaminated) together with the adhesive tape.

### Evaluation:

5/5: excellent
4/4: good
3/5: better than average
2/5: average
1/5: bad
0/5: very bad

### Scratch resistance test:

On the substrate indicated in the table below, a layer of the printing ink of one of the above examples and comparative examples was applied by offset printing (Little Joe printer) in an amount of 1.5 g/m², and dried with UV light (160 W/cm, 30 m/min speed of conveyor). The printed layer was scratched with the flat part of a nail, subsequently with the edge of a nail. The layer was visually inspected for scratches.

### Evaluation:

5/5: excellent, no scratches
4/4: good, few scratches
3/5: better than average
2/5: average
1/5: bad
0/5: very bad

The results of those tests for the above examples and comparative examples are given in the table below:

| **Example** | Adhesion | Scratch resistance |
|---|---|---|
| **Black inks:** | | |
| Example 2 | 4/5 | 3/5 |
| Comparative example 1 | 3-4/5 | 0/5 |
| Comparative example 2 | 5/5 | 1/5 |
| Comparative example 3 | 5/5 | 1/5 |

| **Cyan inks:** | | |
|---|---|---|
| Example 3 | 5/5 | 3/5 |
| Comparative example 4 | 4/5 | 0/5 |
| Comparative example 5 | 4/5 | 0/5 |
| Comparative example 6 | 4-5/5 | 1/5 |

| **White inks:** | | |
|---|---|---|
| Example 4 | 1/5 | 2/5 |
| Comparative example 7 | 1/5 | 0/5 |
| Comparative example 8 | 1/5 | 1/5 |
| Comparative example 9 | 3/5 | 1/5 |

The tests with black and cyan inks were performed on an OPP substrate (oriented polypropylene, opaque white for IML (injection mold labelling), e.g. IML 313-125 from AET films). The white inks, which in their behaviour differ from the other inks, were tested on a PVC mat substrate.

The above tests show a clearly improved scratch resistance of the inks of the present invention, while maintaining sufficient adhesion comparable to that of prior art inks.

### Example 5: Synthesis of modified binder resin

A binder based on a polyurethane modified with hydroxy stearic acid was prepared as described in example 1, with the exception that additionally hydroxy stearic acid was added to the reaction mixture and the following amounts of components were used:

| **Component** | **Wt.-%** |
|---|---|
| MDI | 17, 18 |
| PPG400 | 27,01 |
| HQMME (hydroquinone monomethylether) | 0,03 |
| Phenotiazine | 0, 02 |
| Hydroxy Stearic acid | 4,46 |
| TMPTA | 51,29 |

### Example 6: Synthesis of a magenta printing ink

A printing ink of the present invention was prepared by mixing the following components:

| **Component** | **Wt.-%** |
|---|---|
| Pigment base* | 65,78 |
| Laropal A 81 (51%) | 17,22 |
| TMPTA | 3 |
| Photoinitiator** | 10 |
| Filler (talc) | 2 |
| TOP FLITE 100 | 2 |

| | |
|---|---|
| * : (60 wt.-% of binder of example 5, 1 wt.-% stabilizer (Florstab UV-1), 4 wt.-% filler (talc), 35 wt.-% pigment (carmine Symuler Brill 350)) ** : 9 wt.-% of a mixture of 21.9 wt.-% Benzophenone, 21.9 wt.-% Irgacure 184, 3.7 wt.-% Florstab UV-1, 25 wt.-% TMPTA, and 27.5 wt.% Irgacure 907, and 1 wt.-% of a mixture of 50 wt.-% benzophenone and 50 wt.-% Irgacure 184. | |

The ink had a viscosity of 130 Poises, as measured with a Laray viscosimeter at 30°C an a shear rate between 40.000 s⁻¹ and 70.000 s⁻¹, and a yield value of 3000 Poises. The yield value is the shear stress that has to be applied onto the ink in order to make the ink flow.

### Comparative example 10

The same procedure as described in example 6 was carried out using the same ingredients as in example 6, but in comparative example 10, the pigment base (including the binder according to example 5 of the present invention) was replaced by a conventional binders for UV printing ink:

| **Component** | **Wt.-%** |
|---|---|
| Ebecryl 3608 | 7 |
| Laropal A 81 (51%) | 37 |
| TMPTA | 13 |
| Florstab UV-1 | 1 |
| Photoinitiator** | 10 |
| Filler (talc) | 2 |
| TOP FLITE 100 | 2 |
| Pigment (carmine Symuler Brill 350) | 23 |
| Antitack paste (mixture of silicium dioxide and TMPTA) | 5 |

| | |
|---|---|
| ** : 9 wt.-% of a mixture of 21.9 wt.-% Benzophenone, 21.9 wt.-% Irgacure 184, 3.7 wt.-% Florstab UV-1, 25 wt.-% TMPTA, and 27.5 wt.% Irgacure 907, and 1 wt.-% of a mixture of 50 wt.-% benzophenone and 50 wt.-% Irgacure 184. | |

The ink had a viscosity of 1130 Poises, as measured with a Laray viscosimeter at 30°C an a shear rate between 40.000 s⁻¹ and 70.000 s⁻¹, and a yield value of 8000 Poises. The yield value of the ink of comparative example 10 was thus much higher than the yield value of the ink of example 6, resulting in inferior rheological properties.

### Adhesion test:

The inks according to example 6 and comparative example 10 were subjected to the same adhesion test as described above, on various substrates such as metallised and unmetallised PET (polyethylene terephthalate), PVC, or OPP. The average adhesion of the ink of example 6 on those substrates was 4.25, as compared to an average adhesion of 2.5 of the ink according to comparative example 10.

## Claims

1. UV-curable printing ink comprising a reactive diluent and a polyurethane resin which is inert to said diluent.

2. UV-curable printing ink according to claim 1, **characterized in that** said printing ink is solvent-based.

3. UV-curable printing ink according to claim 1 or 2, **characterized in that** said polyurethane resin has been synthesized in situ in said reactive diluent.

4. UV-curable printing ink according to any of claims 1 to 3, **characterized in that** said polyurethane resin is a modified polyurethane resin.

5. UV-curable printing ink according to any of claims 1 to 4, **characterized in that** said modified polyurethane resin is a stearic acid-modified polyurethane resin.

6. UV-curable printing ink according to any of claims 1 to 5, **characterized in that** said printing ink comprises a combination of at least one unmodified polyurethane resin and at least one modified polyurethane resin or a combination of two or more unmodified polyurethane resins or a combination of two or more modified polyurethane resins.

7. UV-curable printing ink according to any of claims 1 to 6, **characterized in that** said printing ink comprises 20-50 wt.-%, preferably 30-50 wt.-% and most preferably 40-50 wt.-% of the total amount of the printing ink of at least one reactive diluent, and 15-40 wt.-%, preferably 20-35 wt.-% and most preferably 20-30 wt.-% of the total amount of the printing ink of at least one inert polyurethane resin.

8. UV-curable printing ink according to any of claims 1 to 7, **characterized in that** the polyurethane resin does not comprise any free hydroxy groups.

9. UV-curable printing ink according to any of claims 1 to 8, **characterized in that** said printing ink comprises at least one pigment component in an amount of 10-40 wt.-%, preferably 15-30 wt.-% and most preferably 20-30 wt.-% of the total amount of the printing ink.

10. UV-curable printing ink according to any of claims 1 to 9, **characterized in that** said printing ink comprises at least one photoinitiator component in an amount of 1-15 wt.-%, preferably 5-10 wt.-%, of the total amount of the printing ink.

11. Process for preparing a UV-curable printing ink according to any of claims 1 to 10, comprising the steps of
a) adding to a reactor at least one isocyanate component having at least two free isocyanate groups, at least one polyol component, and at least one addition-polymerisation catalyst, wherein the ratio OH/NCO is 2:1 to 1.01:1, preferably 1.5:1.1;
b) adding 1/5 to 1/2, preferably 1/4 to 1/3 of the entire amount of reactive diluent to be present in the final printing ink to the reaction mixture;
c) adding the remaining portion of reactive diluent to the reaction mixture.

12. Process according to claim 11, comprising the additional step d) of converting free hydroxy groups of the at least one polyol component with a monoisocyanate component.

13. Process according to claim 11 or 12, **characterized in that** the resulting product of inert polyurethane resin and reactive diluent has a viscosity of 200-400 Poises, preferably 250-300 Poises, at 30°C, as measured with a Laray viscometer.

14. Process according to any of claims 11 to 13, comprising the additional step e) of adding at least one pigment, at least one photoinitator component and optionally other additives to the binder system of inert polyurethane resin and reactive diluent in order to obtain a printing ink.

15. Use of the printing ink according to any of claims 1 to 10 for offset printing, screen printing or flexographic printing.
